**Europäisches Patentamt**

(19) **European Patent Office**

**Office européen des brevets**

(11) Veröffentlichungsnummer: **0 014 460**
**B1**

(12) **EUROPÄISCHE PATENTSCHRIFT**

(45) Veröffentlichungstag der Patentschrift:
**18.05.83**

(51) Int. Cl.³: **G 01 G 3/14**, G 01 G 19/44

(21) Anmeldenummer: **80100570.3**

(22) Anmeldetag: **04.02.80**

(54) **Plattformwaage mit auf Biegefedern angeordneten dehnungsempfindlichen Messumformern.**

(30) Priorität: **12.02.79 DE 2905314**

(43) Veröffentlichungstag der Anmeldung:
**20.08.80 Patentblatt 80/17**

(45) Bekanntmachung des Hinweises auf die Patenterteilung:
**18.05.83 Patentblatt 83/20**

(84) Benannte Vertragsstaaten:
**AT BE CH FR GB IT NL SE**

(56) Entgegenhaltungen:
**FR-A-993 087**
**FR-A-1 532 022**
**FR-A-2 184 446**
**FR-A-2 356 913**
**FR-A-2 424 523**
**GB-A-1 498 986**
**US-A-3 966 003**

(73) Patentinhaber: **SIEMENS AKTIENGESELLSCHAFT,**
**Berlin und München Wittelsbacherplatz 2,**
**D-8000 München 2 (DE)**

(72) Erfinder: **Fischer, Karl, Hauptstrasse 20,**
**D-7570 Baden-Baden (DE)**
Erfinder: **Fritz, Harald, Hebelstrasse 5,**
**D-7517 Waldbronn 3 (DE)**
Erfinder: **Schröder, Heinrich, Dipl.-Ing.,**
**Max-Beckmann-Strasse 26, D-7500 Karlsruhe (DE)**

Plattformwaage mit auf Biegefedern angeordneten dehnungsempfindlichen Messumformern

Die Erfindung bezieht sich auf eine Plattformwaage mit einer in ihrer Flächenausdehnung mit einer Waagenplattform vergleichbaren steifen Platte, die in einem sie umgebenden steifen Rahmen durch in der Flächenerstreckung der Platte und des Rahmens angeordnete ebene Biegefedern aufgespannt ist, wobei elektrische Ausgangssignale von auf den Biegefedern angebrachten dehnungsempfindlichen Messumformern nach additiver Verknüpfung einer Anzeigeeinheit zugeführt sind.

Eine derartige Plattformwaage ist der US-A-3 966 003 zu entnehmen. Die Biegefedern der Plattformwaage nach der entgegengehaltenen US-A sind als an beiden Enden eingespannte Blattfedern zu betrachten. Bei Belastung der steifen Platte verbiegen sich diese Blattfedern S-förmig. Der Abstand zwischen den Einspannstellen der Blattfedern sucht sich dabei zu verkürzen. Der Verkürzung können jedoch weder die steife Platte noch der Rahmen folgen. Deshalb tritt zusätzlich zu der Biegebeanspruchung der Blattfedern eine beachtliche Zugbeanspruchung auf, die das Messergebnis in unerwünschter Weise verfälschen kann.

Der Erfindung lag die Aufgabe zugrunde, eine Anordnung der Blattfedern gegenüber steifer Platte und Rahmen zu finden, bei der die zusätzliche Zugbeanspruchung erheblich abgebaut wird.

Eine Lösung der Aufgabe ist bei einer eingangs beschriebenen Plattformwaage gemäss der Erfindung dadurch gegeben, dass die Biegefedern längsseitig am Umfang der steifen Platte so angeordnet sind, dass sich beim Umfahren der Platte in einer Richtung ein gleichbleibendes Aufeinanderfolgen der platten-und rahmenseitigen Enden der Federn ergibt.

Durch diese Anordnung der Biegefedern wird erreicht, dass die steife Platte der Verkürzungstendenz des Abstandes der Einspannstellen der Blattfedern durch eine leichte Verdrehung gegenüber dem Rahmen um eine Achse senkrecht zur Plattenebene nachgeben kann. Die zusätzliche Zugbeanspruchung der Biegefedern wird dadurch gemildert und der Messfehler verkleinert.

Für den Fall, dass die steife Platte eine polygonale Grundform hat, können mehrere Anordnungsarten für die Biegefedern im Rahmen der Erfindung vorgesehen werden.

So ist bei einer Ausführungsform vorgesehen, die Biegefedern an den Ecken der polygonalen Platte mit ihren Längserstreckungen quer zu den Diagonalen der Platte anzuordnen.

Zweckmässig können die Biegefedern auch mit ihren Längserstreckungen jeweils parallel zu einer Polygonseite angeordnet sein. Dies ist sowohl in Eckennähe des Polygons als auch in der Mitte einer Polygonseite möglich. Wenn die Biegefedern seitenparallel zu den Polygonseiten der steifen Platte angeordnet sind, ist es zweckmässig, die Lasteinleitungspunkte, an denen sich die Waagenplattform auf die steife Platte stützt, etwa in die Verlängerung der Längsmittellinien der Biegefedern zu legen.

Infolge ihrer flachen Bauweise lässt sich die Plattformwaage in eine Unterlage so einbauen, dass die Waagenplattform mit einer sie umgebenden Fläche fluchtet.

In einer weiteren Ausführungsform der Erfindung ist vorgesehen, die steife·Platte mit mindestens einer Ausnehmung zur Aufnahme eines Behälters mit Austragsorganen auszustatten. Verlagerungen des Schüttkegels eines in den Behälter eingebrachten Schüttgutes beeinflussen die Lastanzeige nicht. Eine derartige Waage kann als Abfüllwaage verwendet werden.

Andere Verwendungsmöglichkeiten der neuen Plattformwaage ergeben sich im Haushalt, als Ladentischwaage in Einzelhandelsgeschäften, als Mengenzählwaage in Industriebetrieben und als Sackwaage in der Landwirtschaft.

Wird die Waage in einen Verkehrsweg eingebaut, so kann sie auch als Radlastwaage dienen.

Es ist auch möglich, die Waagenplattform mit einer aufgesetzten Schale oder dergleichen auszustatten, so dass sie als Säuglingswaage verwendet werden kann.

Die aufgezählten Verwendungsmöglichkeiten der Waage sind keineswegs erschöpfend, sondern stellen nur einzelne, ausgewählte Beispiele dar.

Bei ihrer Verwendung in Nassräumen können für die Messwertumformer besondere Abdeckungen vorgesehen werden.

Die Erfindung wird anhand von zwölf Figuren erläutert.

Die Fig. 1 stellt einen Schnitt durch ein Ausführungsbeispiel einer Personenwaage dar.

In den Fig. 2, 3 und 4 sind verschiedene Ausführungsformen für die steife Platte, die Biegefedern und den Rahmen dargestellt.

Fig. 5 ist eine Schnittdarstellung einer Einzelheit der Fig. 4.

In den Fig. 6 und 7 ist als Abwandlung einer Plattformwaage eine Behälterwaage dargestellt.

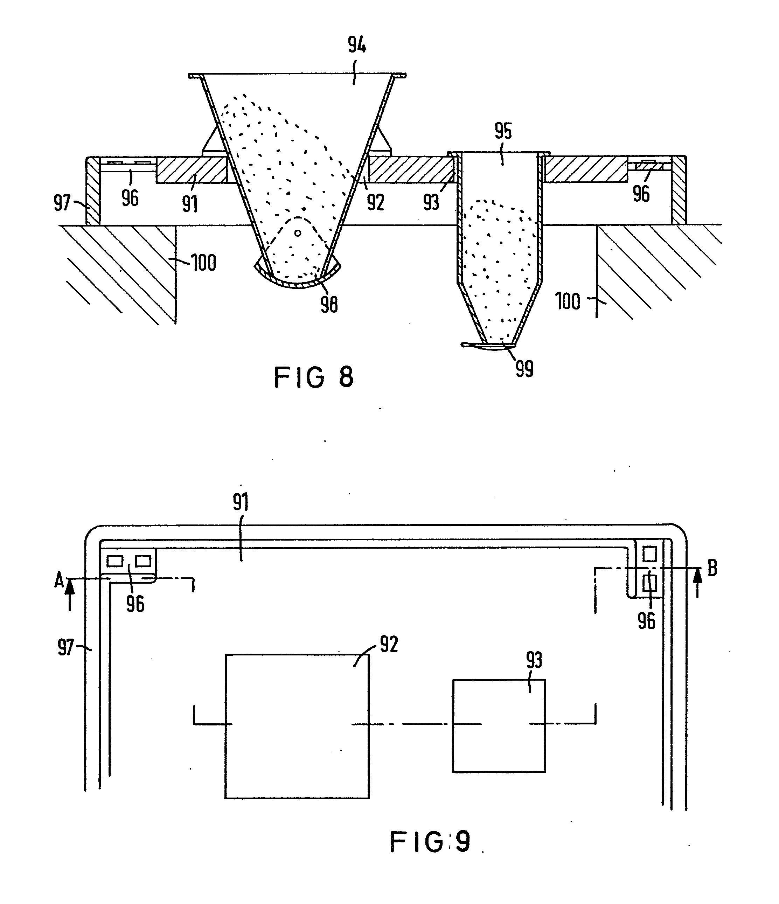

Weitere Behälter- bzw. Abfüllwaagen sind in den Fig. 8 und 9 skizziert.

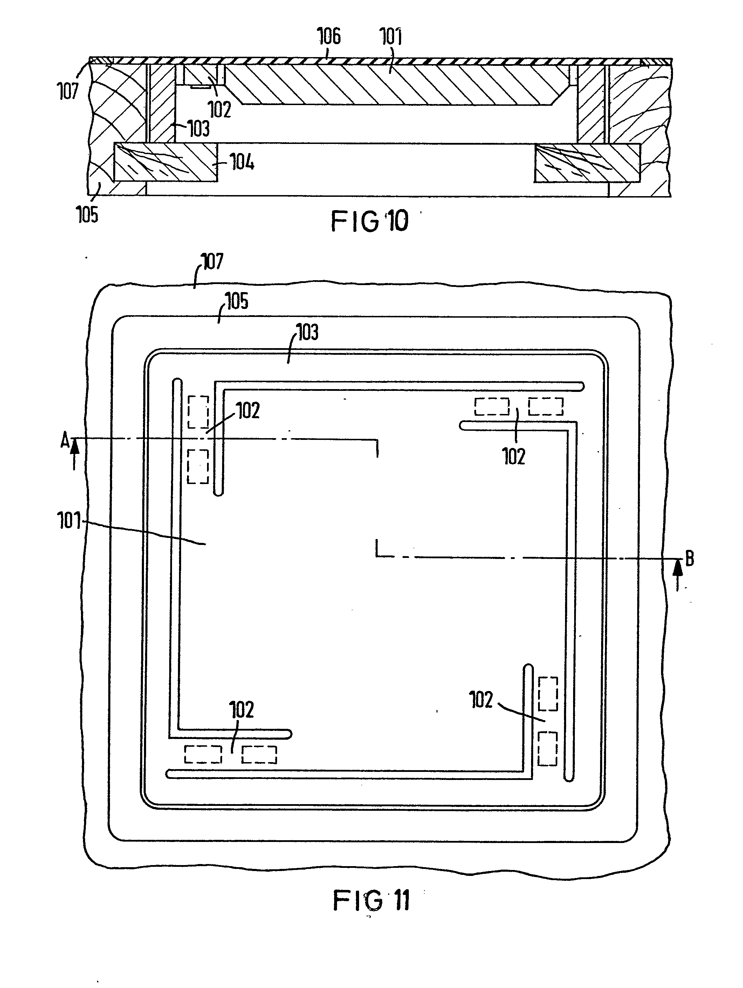

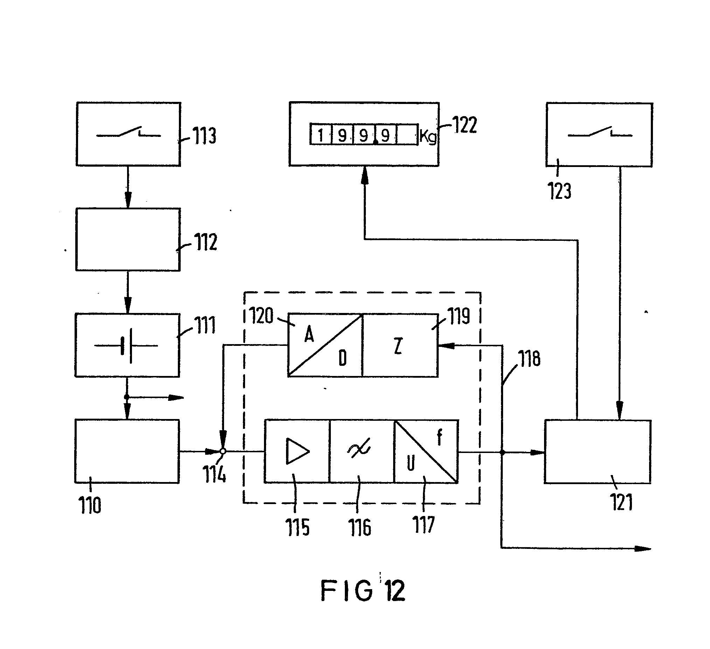

Die Fig. 10 und 11 stellen Schnitt- und Aufsichtsbilder einer in einem Arbeitstisch eingelassenen Plattformwaage dar.

Die Fig. 12 zeigt als Blockschaltbild eine Schaltung zur Auswertung und Anzeige der elektrischen Ausgangssignale der Dehnungsmessumformer.

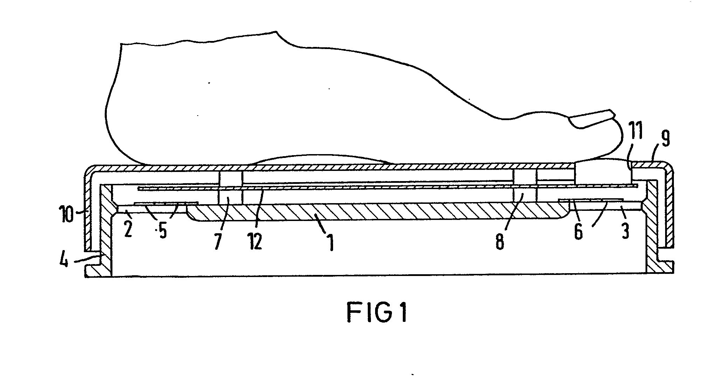

In der Schnittdarstellung der Fig. 1 ist eine steife Platte 1 zu erkennen, die mit Hilfe von Biegefedern 2 und 3 gegenüber einem Rahmen 4 abgestützt ist. Die Biegefedern tragen Dehnungsmessumformer 5 und 6. Über Stützen 7 und 8 sind Lasteinleitungspunkte auf der steifen Platte 1 mit einer Plattform 9 verbunden, auf der die zu wägende Last steht. Ein Rand 10 der Waagenplattform 9 bildet einen Schutzmantel für die Waage. Die Waagenplattform 9 hat eine Durchbrechung 11, in der eine Anzeigeeinheit, beispielsweise ein Zahlendisplay, angeordnet ist. Nichtdargestellte elektrische Elemente zur Verarbeitung der Ausgangssignale der Dehnungsmessumformer 5 und 6 sind auf einer Leiterplatte 12 angeordnet.

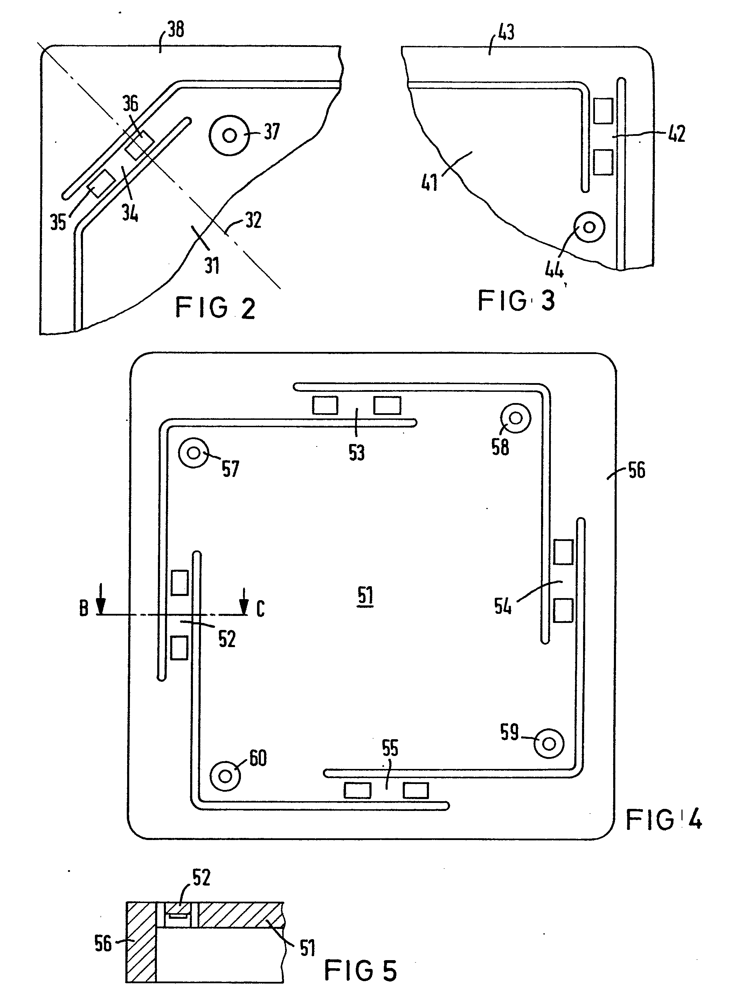

In der Fig. 2 ist eine Ecke einer steifen Platte 31 mit rechteckiger Grundform zu erkennen. Senkrecht zu der Diagonalen 32 ist an der Ecke der rechteckigen Grundform eine Biegefeder 34 angeordnet, über die die steife Platte 31 mit einem steifen Rahmen 38 verbunden ist. Die Biegefeder 34 trägt dehnungsempfindliche Messumformer, beispielsweise Dehnungsmessstreifen 35 und 36. Ein Lasteinleitungspunkt 37 dient der Verbindung der Platte 31 mit einer nicht dargestellten Waagenplattform.

In Fig. 3 ist eine Aufsicht auf ein Eck einer rechteckigen steifen Platte 41 und dessen Verbindung über eine Biegefeder 42 mit einem steifen Rahmen 43 dargestellt. Mit 44 ist ein Lasteinleitungspunkt bezeichnet. Die übrigen, nicht dargestellten Ecken sind entsprechend ausgeführt.

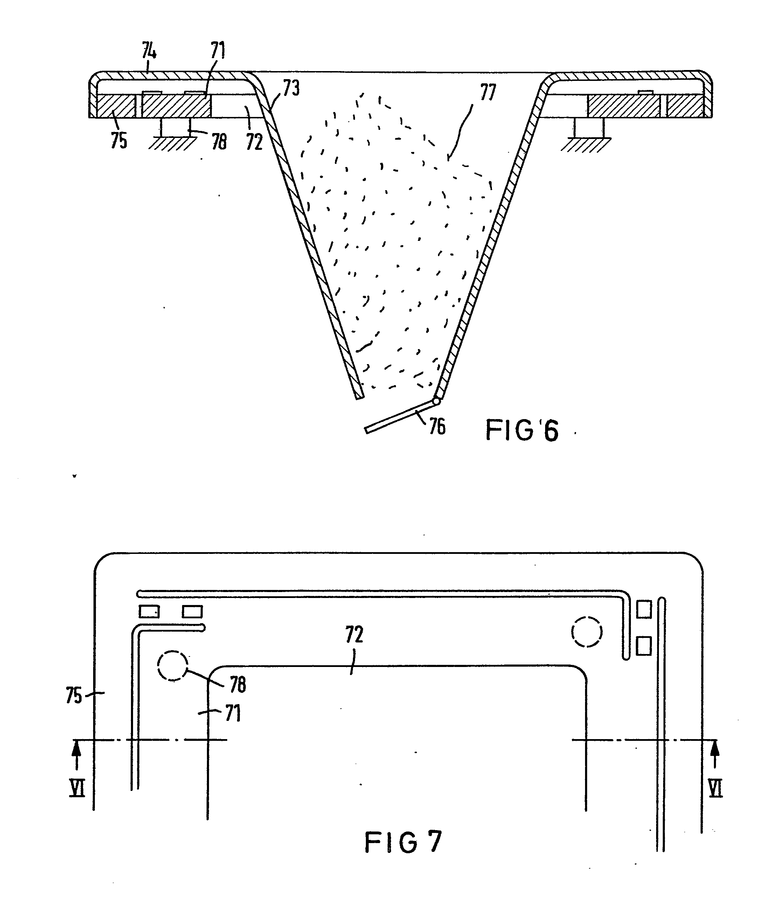

Fig. 4 zeigt eine steife Platte 51 von rechteckiger Grundform. Vier Biegefedern 52 bis 55, die mit ihrer Längserstreckung seitenparallel zu den Seiten der steifen Platte 51 angeordnet sind, stützen die Platte 51 gegenüber einem steifen Rahmen 56 ab. Lasteinleitungspunkte 57 bis 60 liegen jeweils in der Verlängerung der Mittellinie der Biegefedern 52 bis 55.

Die Fig. 5 ist eine Schnittdarstellung längs der Linie B-C der Fig. 5. Es sind die steife Platte 51, die Biegefeder 52 und der steife Rahmen 56 zu erkennen. Weiter ist zu sehen, dass die Biegefeder 52 aus einem gegenüber dem Material der Platte 51 dünneren Material besteht, die Oberflächen der Platte 51 und der Biegefeder 52 jedoch fluchten.

Eine Behälterwaage nach den Fig. 6 und 7, wobei die Fig. 6 eine Schnittdarstellung entlang einer strichpunktierten Linie in Fig. 7 enthält, zeigt die steife Platte 71, die mit einer weiten Ausnehmung 72 versehen ist. In diese Ausnehmung ragt, ohne die Platte 71 zu berühren, ein kegelstumpfförmiger Behälter 73, dessen Rand 74 die steife Platte 71 übergreift und fest mit einem steifen Rahmen 75 verbunden ist. Die Platte 71 ist an Lagerpunkten 78 aufgelagert. Durch eine Klappe 76 kann ein Schüttgut 77 entnommen werden.

In der Fig. 7 sind der Übersichtlichkeit halber nur die Platte 71 mit der Ausnehmung 72 und der Rahmen 75 dargestellt. Ausserdem sind zwei nicht im einzelnen bezeichnete Biegefedern und darauf angeordnete Messumformer sowie die Auflagepunkte 78 zu erkennen.

In den Fig. 8 und 9 ist ebenfalls als Ausführungsbeispiel der neuen Waage eine Behälterwaage gezeigt, die beispielsweise als Sackabfüllwaage dienen kann. Die Fig. 8 enthält dabei einen Schnitt der Fig. 9 entlang der Linie A-B. In der Fig. 8 weist eine steife Platte 91 zwei Ausnehmungen 92 und 93 auf, in die zwei Behälter 94 und 95 eingehängt sind. Die Behälter ruhen also im Gegensatz zu dem Ausführungsbeispiel nach der Fig. 6 auf der steifen Platte 91. Die Platte stützt sich über Biegefedern 96 an einem steifen Rahmen 97 ab, der seinerseits auf einer Unterlage 100 aufgelagert ist. In der Unterlage 100 ist der Raum unter den Behältern 94 und 95 ausgespart, so dass Austragsorgane 98 und 99 der Behälter 94 bzw. 95 von unten frei zugänglich sind.

In der Fig. 9 ist eine Aufsicht auf die Platte 91 mit den Ausnehmungen 92 und 93 gezeichnet, in der Figur sind ausserdem Biegefedern 96 und der Rahmen 97 zu erkennen. Der besseren Übersicht halber sind die Behälter in der Fig. 9 weggelassen.

In den Fig. 10 und 11 ist eine in eine Tischplatte 105 eingelassene Waage dargestellt. Dabei stützt sich eine steife Platte 101 über Biegefedern 102 auf einem Rahmen 103 ab, der seinerseits auf Klötzen 104 ruht, die an der Tischplatte 105 befestigt sind. Die steife Platte 101, die Biegefedern 102 und der Rahmen 103 sind zusammen mit einem Luftspalt zwischen Rahmen und Tischplatte 105 durch einen flexiblen Belag 106 abgedeckt. Der Rest der Tischplatte ist mit einer Auflage 107 belegt.

In der Fig. 11 ist in einer Aufsicht ein Ausschnitt in der Auflage 107 dargestellt, durch die ein Teil der Tischplatte 105, der Luftspalt zwischen der Tischplatte 105 und dem Rahmen 103, der Rahmen selbst, Biegefedern 102 und die steife Platte 101 sichtbar sind. In Fig. 11 ist weiterhin eine Schnittlinie A–B eingezeichnet, die der Darstellung der Fig. 10 entspricht.

In der Fig. 12, die ein Blockschaltbild einer Schaltung zur Auswertung und Anzeige der Ausgangssignale der Dehnungsmessumformer zeigt, wird eine Brückenschaltung 110 aus Dehnungsmessumformern von einer Spannungsquelle 111 gespeist, die auch die Betriebsspannung für mindestens einen Teil der anderen Schalteinheiten liefert.

Die Spannungsquelle wird über eine Zeitstufe 112 durch eine Taste oder einen Sensor 113 eingeschaltet. Die Ausgangsspannung der Brückenschaltung 110 ist mit einem Eingang 114 eines Verstärkers 115 verbunden, dessen Ausgang über ein Filter 116 an einen Spannungs-Frequenz-Umformer 117 angeschlossen ist. Ausgangssignale des Spannungs-Frequenz-Umformers 117 gelangen über eine Kompensationsschleife 118 zu einem Zähler 119. Der jeweilige Zählerstand des Zählers 119 wird in einem Digital-Analog-Wandler 120 in eine proportionale Spannung umgewandelt, die ebenfalls dem Eingang 114 des Verstärkers 115 zugeführt ist. Der Ausgang des Spannungs-Frequenz-Umformers 117 liegt an einem zweiten Zähler 121, dessen Zählerstand über eine Anzeigeeinheit 122 sichtbar gemacht werden kann. Ein Nullstelleingang des Zählers 121 ist mit einer Taste oder einem Sensor 123 verbunden. Durch das Ausgangssignal des Schaltelementes 123 kann der Zähler 121 auf Null gestellt werden. Dadurch ist es möglich, nach Feststellung des Taragewichts der Waage den Zähler 121 auf Null zu stellen und im weiteren Verlauf der Wägung im Zähler 121 nur das Nettogewicht festzuhalten. Ein zusätzlicher Ausgang des Spannungs-Frequenz-Umformers 117 dient zur Weiterleitung von Lastinkrementimpulsen an nicht dargestellte Schalteinheiten zur Weiterverarbeitung.

**Patentansprüche**

1. Plattformwaage mit einer in ihrer Flächenausdehnung mit einer Waagenplattform vergleichbaren steifen Platte (31, 41, 51, 71, 91), die in einem sie umgebenden steifen Rahmen (56) durch in der Flächenerstreckung der Platte (51) und des Rahmens (56) angeordnete ebene Biegefedern (52 bis 55) aufgespannt ist, wobei elektrische Ausgangssignale von auf den Biegefedern (52 bis 55) angebrachten dehnungsempfindlichen Messumformern nach additiver Verknüpfung einer Anzeigeeinheit zugeführt sind, dadurch gekennzeichnet, dass die Biegefedern (52 bis 55) längsseitig am Umfang der steifen Platte (31, 41, 51, 71, 91) so angeordnet sind, dass sich beim Umfahren der Platte in einer Richtung ein gleichbleibendes Aufeinanderfolgen der platten- und rahmenseitigen Enden der Federn (52 bis 55) ergibt.

2. Plattformwaage nach Anspruch 1, dadurch gekennzeichnet, dass die steife Platte (31) eine polygonale Grundform hat, an deren Ecken die Biegefedern (34) mit ihren Längserstreckungen quer zu den Diagonalen (32) des Polygons angeordnet sind (Fig. 2).

3. Plattformwaage nach Anspruch 1, dadurch gekennzeichnet, dass die steife Platte (41) eine polygonale Grundform hat, an deren Ecken die Biegefedern (42) mit ihren Längserstreckungen jeweils parallel zu einer Seite des Polygons angeordnet sind (Fig. 3).

4. Plattformwaage nach Anspruch 1, dadurch gekennzeichnet, dass die steife Platte (51) eine polygonale Grundform hat und die Biegefedern (52 bis 55) mit ihren Längserstreckungen jeweils parallel zu einer Seite des Polygons in deren Mitte angeordnet sind (Fig. 4).

5. Plattformwaage nach Anspruch 1 oder einem der vorhergehenden Ansprüche, dadurch gekennzeichnet, dass Lasteinleitungspunkte (57 bis 60) etwa in der Verlängerung der Längsmittellinie der Biegefedern liegen (Fig. 4).

6. Plattformwaage nach Anspruch 1 oder einem der vorhergehenden Ansprüche, dadurch gekennzeichnet, dass die Waagenplattform in eine sie umgebende Fläche (107) bündig eingelassen ist (Fig. 10).

7. Plattformwaage nach Anspruch 1 oder einem der vorhergehenden Ansprüche, dadurch gekennzeichnet, dass die steife Platte (71, 91) mit mindestens einer Ausnehmung (72, 92, 93) zur Aufnahme eines Behälters (73, 94, 95) mit Austragsorganen (76, 98, 99) ausgestattet ist (Fig. 6–9).

**Claims**

1. A platform scale comprising a rigid plate (31, 41, 51, 71, 91) whose areal dimensioning is comparable with that of a scale platform and which is clamped in a surrounding rigid frame (56) by flat bending springs (52 to 55) arranged in the areal section of the plate (51) and the frame (56), measuring converters sensitive to expansion being arranged on the bending springs (52 to 55) to provide electrical output signals that are additively logic linked and then fed to a display unit, characterised in that the bending springs (52 to 55) are arranged longitudinally on the periphery of the rigid plate (31, 41, 51, 71, 91) in such manner that when the plate is circumvented in a certain direction, the plate- and frameside ends of the springs (52 to 55) follow one another in an uniform sense.

2. A platform scale as claimed in Claim 1, characterised in that the rigid plate (31) possesses a polygonal basic form, at the corners of which are arranged the bending springs (34) with their longitudinal dimensions transverse to the diagonals (32) of the polygon (Fig. 2).

3. A platform scale as claimed in Claim 1, characterised in that the rigid plate (41) possesses a polygonal basic form, at the corners of which the bending springs (42) are arranged with their longitudinal dimensions parallel to one side of the polygon (Fig. 3).

4. A platform scale as claimed in Claim 1, characterised in that the rigid plate (51) possesses a polygonal basic form, and the bending springs (52 to 55) are arranged with their longitudinal dimensions parallel to one side of the polygon in the centre thereof (Fig. 4).

5. A platform scale as claimed in Claim 1 or one of the preceding claims, characterised in that load introduction points (57 to 60) lie approximately in the extension of the longitudinal central line of the bending springs (Fig. 4).

6. A platform scale as claimed in Claim 1 or one of the preceding claims, characterised in that the scale platform is flush fitted into a surrounding surface (107) (Fig. 10).

7. A platform scale as claimed in Claim 1 or one of the preceding claims, characterised in that the rigid plate (71, 91) is equipped with at least one recess (72, 92, 93) which serves to accommodate a container (73, 94, 95) provided with outlet components (76, 98, 99) (Fig. 6–9).

**Revendications**

1. Balance à plateau, comprenant une plaque (31, 41, 51, 71, 91), qui est rigide comparativement à un plateau de balance pour ce qui concerne la déformation en surface et qui est bloquée dans un cadre (56) rigide l'entourant par des ressorts de flexion (52 à 55) plats disposés suivant l'étendue en surface de la plaque (51), des signaux électriques de sortie de transducteurs de mesure sensibles à une déformation et fixés sur les ressorts de flexion (52 à 55) étant envoyés, après une opération d'addition, à une unité d'affichage, caractérisée en ce que les ressorts de flexion (52 à 55) sont disposés par leur côté longitudinal sur le pourtour de la plaque (31, 41, 51, 71, 91) rigide de manière à ce qu'il y ait, lorsque l'on fait le tour de la plaque dans un sens, une succession constante d'extrémités de ressorts se trouvant du côté de la plaque et du côté du cadre.

2. Balance à plateau suivant la revendication 1, caractérisée en ce que la plaque rigide (31) a une forme de base polygonale aux sommets de laquelle sont disposés les ressorts de flexion (34) dont les étendues longitudinales sont disposées transversalement aux diagonales (32) du polygone (fig. 2).

3. Balance à plateau suivant la revendication 1, caractérisée en ce que la plaque rigide (31) a une forme de base polygonale aux sommets de laquelle sont disposés les ressorts de flexion (42) dont les étendues longitudinales sont parallèles respectivement à un côte du polygone (fig. 3).

4. Balance à plateau suivant la revendication 1, caractérisée en ce que la plaque rigide (51) a une forme de base polygonale et les ressorts de flexion (52 à 55) sont disposés en ayant leur étendue longitudinale respectivement parallèle à un côté du polygone, au milieu de ce côté (fig. 4).

5. Balance à plateau suivant la revendication 1 ou l'une des revendications précédentes, caractérisée en ce que les points d'application de la charge (57 à 60) se trouvent à peu près dans le prolongement des médianes longitudinales des ressorts de flexion (fig. 4).

6. Balance à plateau suivant la revendication 1 ou l'une des revendications précédentes, caractérisée en ce que le plateau de la balance est encastré avec affleurement dans une surface (107) qui l'entoure (fig. 10).

7. Balance à plateau suivant la revendication 1 ou l'une des revendications précédentes, caractérisée en ce que la plaque rigide (71, 91) est munie d'au moins un évidement (72, 92, 93) de réception d'un récipient (73, 94, 95) ayant des organes de déchargement (76, 98, 99) (fig. 6 à 9).

FIG 1

FIG 2

36

37

35

34

32

31

38

FIG 3

43

41

42

44

FIG 4

53

58

57

56

B

C

51

54

52

55

59

60

FIG 5

52

56

51

FIG 6

FIG 7

FIG 8

FIG 9

FIG 10

FIG 11

FIG 12